(19) Europäisches Patentamt
European Patent Office
Office européen des brevets

(11) **EP 3 006 897 B1**

(12) **FASCICULE DE BREVET EUROPEEN**

(45) Date de publication et mention de la délivrance du brevet:
**15.03.2023   Bulletin 2023/11**

(21) Numéro de dépôt: **15188878.1**

(22) Date de dépôt: **08.10.2015**

(51) Classification Internationale des Brevets (IPC):
**G01C 21/16** *(2006.01)*       **G01C 25/00** *(2006.01)*

(52) Classification Coopérative des Brevets (CPC):
**G01C 21/16; G01C 25/005**

(54) **PROCEDE DE NAVIGATION D'UN VEHICULE, DISPOSITIF DE NAVIGATION ET VEHICULE POUR LA MISE EN OEUVRE DE CE PROCEDE.**

NAVIGATIONSVERFAHREN EINES FAHRZEUGS, NAVIGATIONSVORRICHTUNG UND FAHRZEUG FÜR DIE UMSETZUNG DIESES VERFAHRENS

METHOD FOR NAVIGATING A VEHICLE, NAVIGATION DEVICE AND VEHICLE FOR CARRYING OUT SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **08.10.2014   FR 1459656**

(43) Date de publication de la demande:
**13.04.2016   Bulletin 2016/15**

(73) Titulaire: **Safran Electronics & Defense**
**92100 Boulogne-Billancourt (FR)**

(72) Inventeurs:
• **LENOBLE, Alexandre**
**77550 Moissy-Cramayel (FR)**
• **FOLOPPE, Yannick**
**77550 Moissy-Cramayel (FR)**

(74) Mandataire: **Lavialle, Bruno François Stéphane et al**
**Cabinet Boettcher**
**16, rue Médéric**
**75017 Paris (FR)**

(56) Documents cités:
**EP-A1- 0 488 594       WO-A1-97/24584**
**US-A1- 2012 185 205    US-B1- 6 292 751**
**US-B2- 6 564 148**

**Description**

La présente invention concerne la navigation de véhicule et plus particulièrement la navigation au moyen d'une centrale inertielle.

Il existe des véhicules qui sont équipés d'une centrale inertielle utilisée à des fins de navigation.

Une telle centrale inertielle comprend une unité de traitement reliée à des accéléromètres et des gyroscopes ou gyromètres disposés selon des axes d'un repère de mesure pour détecter respectivement des accélérations le long de ces axes et une grandeur angulaire, comme la position ou la vitesse, autour de ces axes. A partir de ces mesures, l'unité de traitement est agencée pour déterminer une attitude du véhicule porteur (en roulis, tangage et lacet), une position du véhicule et un cap suivi par le véhicule.

Or, une centrale inertielle présente des erreurs (décalages et dérives) qui affectent la précision des mesures et qui sont variables avec le temps, et le coût d'une centrale inertielle est directement lié aux performances des capteurs (accéléromètres et capteurs angulaires) qui la composent de sorte que l'utilisation de capteurs plus précis peut rapidement augmenter le coût d'une centrale inertielle.

Lorsque le véhicule est équipé d'un récepteur de signaux satellitaires de géolocalisation, par exemple de type GPS, il est connu de recaler périodiquement la centrale inertielle en utilisant les signaux satellitaires de géolocalisation. Or, il est possible que la réception de signaux satellitaires ne soit pas possible sur de longues périodes (le récepteur est masqué vis-à-vis des satellites par le relief et la végétation par exemple, ou bien encore brouillé). Le maintien du suivi de la position et du cap du véhicule repose alors uniquement sur les performances des capteurs (accéléromètres, gyroscopes) de la centrale inertielle.

Il est aussi connu de recaler la centrale inertielle en utilisant des signaux provenant d'autres capteurs comme un magnétomètre. Un tel capteur est cependant perturbé par les masses métalliques importantes telles que la carrosserie d'un véhicule de sorte que le recalage réalisé manque de précision.

Il est connu des documents WO-A-97/24584 et EP-A-0488594 un procédé de navigation comportant les étapes de :

- détecter au moins une période d'immobilité du véhicule ;
- traiter les signaux qui sont fournis par la centrale inertielle du véhicule pendant chaque période d'immobilité pour déterminer une erreur de la centrale inertielle. Ces procédés, satisfaisants avec des capteurs inertiels performants, ont des résultats imparfaits avec des capteurs inertiels à faible coût.

Il existe donc un besoin d'améliorer les performances des centrales inertielles sans recourir à des composants notablement plus coûteux.

A cet effet, on prévoit, selon l'invention, un procédé de navigation d'un véhicule embarquant une centrale inertielle selon la revendication 1.

En l'absence d'erreur et lorsque le véhicule est immobile tant en position qu'en cap, la centrale inertielle doit fournir des signaux représentatifs de cet état du véhicule. Ainsi, si la centrale inertielle fournit, lorsque le véhicule est immobile tant en position qu'en cap, des signaux représentatifs d'un mouvement du véhicule, ces signaux sont en réalité représentatifs de l'erreur qui affecte les capteurs de la centrale inertielle. Il est alors possible de déterminer cette erreur et d'en tenir compte pour calculer plus précisément la position et le cap du véhicule. On insiste sur l'immobilité du véhicule en cap : alors que le véhicule est immobile en position, des mouvements en cap peuvent se produire par exemple sous l'effet du déplacement des occupants du véhicule. Ces mouvements empêchent normalement de déterminer l'erreur exacte et altère donc les corrections réalisables à partir de l'erreur déterminée. Le procédé de l'invention permet de fiabiliser la détermination de l'erreur et donc la navigation dans son ensemble en particulier lorsque les capteurs ont des performances relativement faibles.

L'invention a également pour objet un dispositif de navigation agencé pour la mise en œuvre de ce procédé.

L'invention concerne en outre un véhicule intégrant un tel dispositif de navigation.

D'autres caractéristiques et avantages de l'invention ressortiront à la lecture de la description qui suit de modes de réalisation particuliers non limitatifs de l'invention.

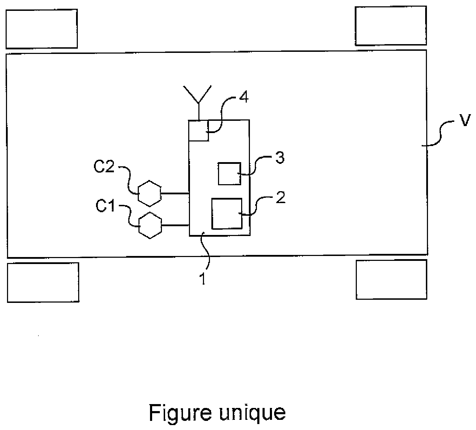

Il sera fait référence à la figure unique annexée qui est une vue schématique de dessus d'un véhicule conforme à l'invention.

En référence aux figures, l'invention ici décrite est mise en œuvre dans un véhicule terrestre V à moteur, de type voiture, comportant des compteurs, à savoir un compteur kilométrique de type odomètre C1 et un compteur de vitesse (tachymètre ou cinémomètre) C2.

La voiture V embarque un dispositif de navigation, généralement désigné en 1, comportant une unité de traitement 2 reliée à une centrale inertielle 3 et à un récepteur 4 de signaux satellitaires de géolocalisation (par exemple de type GPS). Le récepteur 4 et le traitement des signaux satellitaires à des fins de géolocalisation et de navigation sont connus en eux-mêmes et ne seront donc pas détaillés ici. Le dispositif de navigation est en outre relié aux compteurs C1, C2 (en variante, le dispositif de navigation peut n'être relié qu'à l'un de ces capteurs).

La centrale inertielle 3 comprend, de façon connue en elle-même, des capteurs inertiels à savoir des capteurs accélérométriques linéaires et des capteurs angulaires de type gyroscope ou gyromètre, qui sont disposés selon les axes d'un repère de mesure. La structure de la centrale inertielle 3 et le traitement des signaux fournis par ladite centrale inertielle 3 aux fins de navigation sont connus dans leurs principes et ne seront détaillés que dans la mesure où cela est nécessaire pour la compréhension de l'invention.

L'unité de traitement 2 comprend des moyens informatiques programmés pour mettre en œuvre un algorithme de fusion de données, ici un filtre de Kalman, et exécuter le procédé de navigation décrit ci-après.

Dans son mode de fonctionnement nominal, le procédé de navigation comprend l'étape de calculer des positions et des caps successifs du véhicule à partir de signaux provenant de la centrale inertielle. Ces calculs successifs sont réalisés via le filtre de Kalman de manière connue en elle-même.

Le procédé de l'invention comprend en outre les étapes de :

- détecter des périodes d'immobilité du véhicule en cap et en position ;
- traiter les signaux qui sont fournis par la centrale inertielle 3 pendant chaque période d'immobilité et qui indiquent un mouvement du véhicule pour déterminer une erreur de la centrale inertielle 3 ;
- tenir compte de l'erreur déterminée dans le calcul de la position et du cap du véhicule à partir des signaux de la centrale inertielle 3.

La détection de l'immobilité en position est effectuée en exploitant les signaux du compteur de vitesse C2 et/ou de l'odomètre C1 du véhicule V, et également les signaux provenant de la centrale inertielle 3.

De préférence, la détection de l'immobilité en position comprend les phases de :

- intégrer des signaux issus des capteurs accélérométriques et des capteurs angulaires de la centrale inertielle, dans un repère tournant selon une orientation détectable des capteurs angulaires, pour obtenir un signal brut d'accélération, vitesse et position pendant une durée prédéterminée,
- enregistrer le signal brut d'accélération, vitesse et position pendant cette durée prédéterminée,
- déterminer les paramètres d'un signal théorique de modélisation du signal brut d'accélération, vitesse et position en fonction d'un modèle prédéterminé d'erreur en l'absence de mouvement,
- calculer un signal résiduel entre le signal théorique de modélisation et le signal brut d'accélération, vitesse et position,
- détecter une immobilité lorsque le signal résiduel est inférieur à un seuil limite prédéterminé.

Une fois que l'immobilisation en position est détectée, la détection de l'immobilité en cap est amorcée. On notera que le fait que la détection de l'immobilité en cap et en position comprenne une première phase de détection de l'immobilité en position et une deuxième phase de détection de l'immobilité en cap, la deuxième phase n'étant réalisée que si la première phase est validée, permet de gagner du temps et de limiter les calculs en cas de mobilité.

La détection de l'immobilité en cap est effectuée en surveillant la stabilité de la sortie du capteur angulaire vertical pendant la période d'immobilité. On néglige la partie constante de la sortie car on ne peut la distinguer d'une erreur du capteur angulaire vertical. La détection d'immobilité est, de préférence, effectuée au moyen du procédé du document US-A-20120185205 en calculant des résidus sur la sortie du capteur angulaire vertical et sur l'intégration temporelle de cette sortie. Toutefois, cette méthode ne permet pas de déterminer la nature des mouvements éventuels auxquels serait soumis le véhicule alors que des mouvements de hautes fréquences, à moyenne nulle, ne perturbent pas la calibration des erreurs des capteurs qui sera effectuée par la suite ; tandis que des mouvements basses fréquences seront eux gênants. On calcule donc en outre un paramètre de stabilité du signal, ici une variance d'Allan, sur les résidus calculés puis une différence entre la variance d'Allan calculée et une variance d'Allan théorique lorsque le cap est immobile : l'immobilité du cap est confirmée si la variance d'Allan est inférieure à un seuil prédéterminé.

Ainsi, la détection de l'immobilité en cap comprend les phases de :

- intégrer les signaux issus des capteurs accélérométriques et des capteurs angulaires de la centrale inertielle 3, dans un repère tournant selon une orientation détectable des capteurs angulaires, pour obtenir un signal brut d'accélération, vitesse, cap, roulis et tangage pendant la durée de la période d'immobilité en position,
- enregistrer le signal brut de cap pendant cette durée,

- déterminer les paramètres d'un signal théorique de modélisation du signal brut de cap en fonction d'un modèle prédéterminé d'erreur en l'absence de mouvement,
- calculer un signal résiduel entre le signal théorique de modélisation et le signal brut de cap,
- calculer une variance d'Allan à partir du signal résiduel,
- calculer une différence entre la variance d'Allan calculée et une variance d'Allan théorique lorsque le cap est immobile,

- confirmer l'immobilité du cap si la différence est inférieure au seuil prédéterminé.

Il sera veillé à choisir un seuil qui ne soit ni trop faible ni trop élevé : si le seuil est trop élevé, une immobilité sera détectée alors qu'en réalité le véhicule est en mouvement (vibrations du moteur, passager montant dans le véhicule...) ; si le seuil est trop faible, il ne sera jamais détecté d'immobilité. Pour le calcul de la variance d'Allan, on choisit par exemple une période d'échantillonnage d'une seconde, ce qui permet de moyenner la partie du signal correspondant aux mouvements de hautes fréquences. La variance d'Allan sera de préférence calculée au moins en angle de cap et en vitesse angulaire de cap. Ce procédé est appliqué également aux accélérations géographiques et aux vitesses géographiques pour détecter et/ou confirmer l'immobilité en position.

La prise en compte de l'erreur comprend l'étape de déterminer une évolution temporelle de l'erreur à partir du modèle d'erreur des capteurs de la centrale inertielle et l'étape d'intégrer dans le temps l'erreur pour déterminer le cap réellement suivi. Ces modèles d'erreur sont élaborés de manière empirique à partir d'essais menés de manière à pouvoir déterminer la variation temporelle des erreurs. Le modèle d'erreur et les mesures effectuées lors des périodes d'immobilité permettent de reconstruire la dérive de performance des capteurs (et plus précisément le capteur angulaire d'axe vertical) au cours du temps. Il est dès lors possible de déterminer l'erreur de navigation qu'a causé l'erreur des capteurs et de la corriger et donc de déterminer la position réelle du véhicule V.

La correction est ici réalisée au moyen du filtre de Kalman qui contient les modèles temporels d'erreur des capteurs et les modèles temporels des erreurs de navigation et à qui l'on fournit les mesures effectuées pendant les périodes d'immobilité et les mesures de l'odomètre C1 et du compteur de vitesse C2, ainsi que les mesures issues des signaux satellitaires de géolocalisation.

Pour assurer une bonne précision du procédé de l'invention, on prévoit de préférence un arrêt de dix à trente secondes toutes les vingt minutes environ. Il est entendu que plus les arrêts sont nombreux et longs, et plus le procédé est précis.

On note que dans le mode de mise en œuvre décrit, on utilise des capteurs inertiels autonomes dont les mesures sont utilisées dans une navigation autonome à partir d'une position connue.

Les données issues des signaux satellitaires sont utilisées pour ponctuellement initialiser et recaler la navigation lorsque ces signaux sont disponibles.

On note également que l'utilisation des capteurs C1, C2 pour limiter la dérive des capteurs inertiels (à partir du procédé décrit dans le document US-A-6564148) et l'exploitation des arrêts du véhicule pour effectuer des recalages à vitesse nulle durant lesquels on force à zéro les vitesses fournies par les capteurs inertiels (comme dans le document US-A-6292751) ne sont pleinement efficaces que pour les capteurs inertiels dont les axes sensibles sont sensiblement horizontaux et qui ont en outre de bonnes performances. Il en résulte que les erreurs de cap vont engendrer des erreurs de positions que les méthodes précitées ne permettront pas de résoudre en totalité.

Dans le procédé ici mise en oeuvre, les arrêts du véhicule durant lesquels le cap reste constant sont en outre utilisés pour calibrer la dérive des capteurs inertiels, et en particulier du capteur angulaire d'axe vertical, grâce à un modèle représentatif des erreurs. Ce modèle est de préférence déterminé par une caractérisation de la stabilité de la sortie de ce capteur à partir de l'élaboration expérimentale d'une courbe de la variance d'Allan dans des conditions représentatives de l'utilisation du système de navigation. L'ensemble des arrêts du véhicule au cours de sa trajectoire permet de reconstruire la dérive de performance des capteurs (en particulier le capteur angulaire d'axe sensiblement vertical) au cours du temps, et ainsi de calculer l'erreur de navigation résultant de cette erreur capteur et de la corriger avec une précision comparable à celle des systèmes de navigation utilisant des capteurs inertiels de meilleures performances.

Plus particulièrement, on modélise les erreurs de navigation « ErrNav » comme une fonction ErrNav(t,ErrSensor(t)) dépendant du temps « t » d'une part et des erreurs des capteurs « ErrSensor » (ellesmêmes fonction du temps) d'autre part. En reconstruisant ErrSensor(t), il est possible de corriger les erreurs de navigation ErrNav. Cette correction peut être réalisée à l'aide du filtre (filtrage de Kalman dans le présent exemple) dans lequel on renseigne les modèles temporels des capteurs ainsi que les modèles temporels des erreurs de navigation. Ce filtre est alors alimenté par les mesures des capteurs inertiels réalisées lors des arrêts du véhicule avec une rotation en cap nulle et des aides externes éventuellement disponibles (signal GNSS, capteur de vitesse véhicule, cartographie etc...). Le filtre est alors capable de corriger au cours de la navigation courante les différentes erreurs des capteurs et des sorties de navigation.

Comme indiqué précédemment, il faut néanmoins ajouter des fonctionnalités nécessaires au bon fonctionnement de ce filtre : une détection d'arrêt du véhicule (immobilisation en position) ainsi qu'une détection de cap constant (immobilisation en cap). Si ces détections ne sont pas suffisamment fines, le filtre risque de dégrader les performances de navigation lors d'une détection d'arrêt ou de cap constant erroné.

Une détection de stabilité de rotation en cap et de déplacement du véhicule très fine permet d'éviter que la calibration du capteur angulaire d'axe vertical ne soit faussée. Une telle détection de mouvement est connue en elle-même du document US-A-20120185205. Cette méthode est appliquée sur les données de cap, de vitesse de rotation en cap, d'accélérations géographiques et de vitesses géographiques. La comparaison du résultat du test de stabilité sur le cap et la vitesse de cap permet de déterminer si le mouvement est un mouvement "haute fréquence" (une vibration typiquement ==> rotation à moyenne nulle) qui n'est pas gênante pour la calibration des erreurs des capteurs, ou bien un mouvement "basse fréquence" qui caractérise un mouvement du véhicule. Si un mouvement du véhicule est détecté, les données des capteurs ne doivent pas être calibrées finement. Le même principe est appliqué aux vitesses géographiques et aux accélérations géographiques. Le véhicule est considéré à l'arrêt si aucun mouvement sur les vitesses géographiques n'est détecté. Le système est considéré à cap constant s'il est à l'arrêt et qu'aucun mouvement de basse fréquence en cap n'est détecté. Les résidus des données analysées par rapport à un modèle polynomial dépendent des bruits des capteurs et du mouvement du porteur.

On notera que pour la détection de rotation en cap, la méthode de calcul des résidus est appliquée sur :

- les sorties de rotation en cap de la navigation durant une fenêtre glissante d'observation T,
- la donnée de cap de la navigation (qui est l'intégration temporelle des sorties de rotation en cap) durant une fenêtre glissante d'observation T.

Ces résidus peuvent être comparés à un seuil. Cette méthode est efficace pour détecter un infime mouvement du porteur. En revanche, elle ne fournit pas directement d'information sur la nature du mouvement. Or, comme indiqué ci-dessus, certains mouvement de haute fréquence (mais donc à moyenne nulle) sont tolérables, alors que les mouvements de basse fréquence (donc des mouvements à moyenne non nulle) sont gênants pour le filtre de navigation.

Afin de compléter cela, une mesure de la variance d'Allan des résidus sur chaque fenêtre d'observation est réalisée. La comparaison entre la variance d'Allan des sorties de rotation en cap et la variance d'Allan de l'intégrale de ces données de rotation en cap est utilisée pour déterminer la nature du mouvement détecté.

Si on modélise un mouvement de haute fréquence par une raie angulaire (vibration du véhicule par exemple), on peut montrer que la variance d'Allan sur le résidu d'angle au temps Tau (Tau < durée de la fenêtre d'analyse T) est donnée par :

$$2*AmpMvt*sin(w/2*Tau)^2/(w*Tau)$$

où w est la pulsation de la vibration angulaire et AmpMvt est l'amplitude de la vibration.

Ce même mouvement génère une variance d'Allan sur les résidus de vitesse rotation angulaire au temps Tau (Tau < durée de la fenêtre d'analyse T) qui est égale à :

$$2*AmpMvt*sin(w/2*Tau)^2/(w^2*Tau).$$

Ces signatures de variance d'Allan sont différentes pour un mouvement de basse fréquence. Si ce mouvement est modélisé par une marche au hasard par exemple, alors sa variance d'Allan sur les résidus d'angle au temps Tau (Tau < durée de la fenêtre d'analyse T) est égale à :

$$DSPrw*Tau/3 \ [rad^2].$$

La variance d'Allan sur les résidus de vitesse angulaire au temps Tau (Tau < durée de la fenêtre d'analyse T) est égale à :

$$DSPrw/Tau \ [(rad/s)^2].$$

Ainsi, les variances d'Allan en angle et en vitesse angulaire d'un mouvement permettent de déterminer la nature du mouvement (dans l'exemple donné, la vibration angulaire de haute fréquence a un ratio variance d'Allan en angle / variance d'Allan en vitesse angulaire égale à 1/w (indépendant de Tau), alors qu'un mouvement de basse fréquence a un ratio variance d'Allan en angle / variance d'Allan en vitesse angulaire égale à Tau^2/3).

Les paramètres des mouvements de haute fréquence et basse fréquence peuvent être comparés à des seuils acceptables à régler en fonction de la performance des capteurs et de la performance de navigation souhaitée. Ces valeurs peuvent aussi être utilisées afin de régler le filtre de navigation (comme pour régler un filtre de Kalman par exemple).

Pour la détection d'arrêt du véhicule, la méthode de calcul des résidus est appliquée sur :

- les sorties inertielles d'accélération de la navigation durant une fenêtre glissante d'observation T,
- les données inertielles de vitesse de la navigation (qui est l'intégration temporelle des accélérations inertielles) durant une fenêtre glissante d'observation T.

Ces résidus peuvent être comparés à un seuil. Cette méthode est efficace pour détecter un infime mouvement du porteur. Comme on l'a vu, elle ne fournit pas directement d'information sur la nature du mouvement alors que les mouvements de haute fréquence sont tolérables, tandis que les mouvements de basse fréquence sont gênants pour le filtre de navigation.

Comme précédemment, une mesure de la variance d'Allan de ces résidus sur chaque fenêtre d'observation est réalisée. La comparaison entre la variance d'Allan des sorties de vitesse inertielles et la variance d'Allan des accélérations inertielles est utilisée pour déterminer la nature du mouvement détecté.

Ce test est complété par une analyse des données externes (capteur de vitesse du véhicule, données satellitaires...) si elles sont disponibles.

La mise en oeuvre du procédé de l'invention permet de corriger au moins une partie des erreurs de position calculées préalablement et de limiter les erreurs futures.

Bien entendu, l'invention n'est pas limitée aux modes de réalisation décrits mais englobe toute variante entrant dans le champ de l'invention telle que définie par les revendications.

En particulier, le dispositif de navigation peut avoir une structure différente de celle décrite et le véhicule peut être d'un autre type qu'une voiture. Le véhicule peut être un véhicule avec ou sans présence humaine à bord.

Le dispositif de navigation peut ne pas être relié aux compteurs du véhicule.

La détection de l'immobilité en position peut être déterminée en surveillant la stabilité de la sortie des capteurs et compteurs, sur le même principe que la détection de l'immobilité en position. Ainsi, au lieu de comparer directement le signal résiduel à un seuil, une variance d'Allan est calculée à partir du signal résiduel, et l'immobilité de la position est confirmée si la différence entre la variance d'Allan calculée et une variance d'Allan théorique lorsque la position est fixe est inférieure à un seuil prédéterminé.

En variante, la détection de l'immobilité du véhicule V est effectuée en exploitant les signaux d'un récepteur de signaux de géolocalisation par satellite. La détection d'immobilité peut utiliser tout ou partie des signaux de la centrale inertielle.

En variante encore, le calcul de la variance d'Allan est omis pour la détection de l'immobilité en cap. La détection se termine alors par la phase de détecter une immobilité lorsque le signal résiduel est inférieur à un seuil limite prédéterminé. Le seuil limite est par exemple calculé pour prendre en compte une valeur d'écart-type du bruit des capteurs accélérométriques et angulaires comme indiqué dans le document US-A-20120185205.

## Revendications

1. Procédé de navigation d'un véhicule embarquant une centrale inertielle, comprenant l'étape de calculer des positions et des caps successifs du véhicule à partir de signaux de la centrale inertielle, le procédé comprenant en outre les étapes de :

   - détecter au moins une période d'immobilité à la fois en cap et en position du véhicule,
   - traiter les signaux qui sont fournis par la centrale inertielle pendant ladite période d'immobilité pour déterminer une erreur de la centrale inertielle,
   - tenir compte de l'erreur déterminée dans le calcul de la position et du cap du véhicule à partir des signaux de la centrale inertielle ;

   **caractérisé en ce que** la détection d'immobilité comprend une détection d'immobilité en cap qui comprend les phases de :

   - intégrer des signaux issus de capteurs accélérométriques et de capteurs angulaires de la centrale inertielle, dans un repère tournant selon une orientation détectable des capteurs angulaires, pour obtenir un signal brut de cap pendant une durée prédéterminée,
   - enregistrer le signal brut de cap pendant cette durée prédéterminée,
   - déterminer les paramètres d'un signal théorique de modélisation du signal brut de cap en fonction d'un modèle prédéterminé d'erreur en l'absence de mouvement,
   - calculer un signal résiduel entre le signal théorique de modélisation et le signal brut de cap,
   - calculer une variance d'Allan à partir du signal résiduel,
   - calculer une différence entre la variance d'Allan calculée et une variance d'Allan théorique lorsque le cap est immobile,
- confirmer l'immobilité du cap si la différence est inférieure à un seuil prédéterminé ;

et **en ce que** la prise en compte de l'erreur comprend une étape de déterminer une évolution temporelle de l'erreur à partir d'un modèle d'erreur de la centrale inertielle et l'étape d'intégrer dans le temps l'erreur pour déterminer le cap réellement suivi.

2. Procédé selon la revendication 1, dans lequel la détection de l'immobilité en position est effectuée en exploitant notamment les signaux d'un capteur du véhicule tel qu'un compteur de vitesse ou un odomètre.

3. Procédé selon la revendication 1, dans lequel la détection de l'immobilité en position est effectuée en exploitant les signaux d'un récepteur de signaux de géolocalisation par satellite.

4. Procédé selon la revendication 1, dans lequel la détection d'immobilité en cap comprend les étapes de :

- calculer une variance d'Allan sur des données angulaires d'angle et une variance d'Allan sur des données angulaires de vitesse pour une même période de temps,
- calculer un rapport entre ces deux variances d'Allan,
- distinguer la présence d'un mouvement de haute fréquence et la présence d'un mouvement de basse fréquence en fonction de ce rapport,
- considérer le véhicule immobile en cap en l'absence de mouvement de basse fréquence.

5. Procédé selon la revendication 1, dans lequel l'étape de détection comprend ultérieurement la phase de :

- détecter une immobilité lorsque le signal résiduel est inférieur à un seuil limite prédéterminé.

6. Procédé selon la revendication 1, dans lequel la détection de l'immobilité en position comprend les phases de

- intégrer des signaux issus de capteurs accélérométriques et de capteurs angulaires de la centrale inertielle, dans un repère tournant selon une orientation détectable des capteurs angulaires, pour obtenir un signal brut d'accélération, vitesse et position pendant une durée prédéterminée,
- enregistrer le signal brut d'accélération, vitesse et position pendant cette durée prédéterminée,
- déterminer les paramètres d'un signal théorique de modélisation du signal brut d'accélération, vitesse et position en fonction d'un modèle prédéterminé d'erreur en l'absence de mouvement,
- calculer un signal résiduel entre le signal théorique de modélisation et le signal brut d'accélération, vitesse et position.

7. Procédé selon la revendication 6, dans lequel l'étape de détection comprend ultérieurement la phase de :

- détecter une immobilité lorsque le signal résiduel est inférieur à un seuil limite prédéterminé.

8. Procédé selon la revendication 6, dans lequel la détection de l'immobilité en position comprend ultérieurement une phase de calcul d'une variance d'Allan à partir du signal résiduel, une phase de calcul d'une différence entre la variance d'Allan calculée et une variance d'Allan théorique lorsque la position est fixe, et une phase de confirmation de l'immobilité de la position si la différence est inférieure à un seuil prédéterminé.

9. Procédé selon la revendication 1, dans lequel la détection de l'immobilité en cap et en position, comprend une première phase de détection de l'immobilité en position et une deuxième phase de détection de l'immobilité en cap, la deuxième phase n'étant réalisée que si la première phase est validée.

10. Procédé selon la revendication 1, dans lequel la prise en compte de l'erreur comprend les opérations de : reconstruire la dérive de performance des capteurs au cours du temps, déterminer l'erreur de navigation qu'a causé l'erreur des capteurs, la corriger et déterminer la position réelle du véhicule.

11. Dispositif de navigation comprenant une centrale inertielle, le dispositif étant agencé pour mettre en œuvre un procédé de navigation conforme à l'une quelconque des revendications précédentes.

12. Véhicule équipé d'un dispositif de navigation qui comporte une centrale inertielle et qui est agencé pour mettre en œuvre un procédé de navigation conforme à l'une quelconque des revendications 1 à 10.

**Patentansprüche**

1. Verfahren zur Navigation eines Fahrzeugs, das eine inertiale Messeinheit an Bord hat, umfassend den Schritt des Berechnens aufeinanderfolgender Positionen und Kurse des Fahrzeugs anhand von Signalen der inertialen Messeinheit, wobei das Verfahren ferner die Schritte umfasst:

   - Erfassen mindestens einer Periode des Stillstands sowohl in Bezug auf den Kurs als auch die Position des Fahrzeugs,
   - Verarbeiten der Signale, die von der inertialen Messeinheit während der genannten Stillstandsperiode geliefert werden, um einen Fehler der inertialen Messeinheit zu ermitteln,
   - Berücksichtigen des ermittelten Fehlers bei der Berechnung der Position und des Kurses des Fahrzeugs anhand der Signale der inertialen Messeinheit;

   **dadurch gekennzeichnet, dass** die Stillstandserfassung eine Kursstillstandserfassung umfasst, die die Phasen umfasst:

   - Integrieren von Signalen, die von Beschleunigungssensoren und Winkelsensoren der inertialen Messeinheit stammen, in ein Bezugssystem, das sich gemäß einer von den Winkelsensoren erfassbaren Ausrichtung dreht, um ein Rohkurssignal während einer vorgegebenen Dauer zu erhalten,
   - Aufzeichnen des Rohkurssignals während dieser vorgegebenen Dauer,
   - Bestimmen der Parameter eines theoretischen Signals der Modellierung des Rohkurssignals in Abhängigkeit von einem vorgegebenen Fehlermodell bei fehlender Bewegung,
   - Berechnen eines Restsignals zwischen dem theoretischen Modellsignal und dem Rohkurssignal,
   - Berechnen einer Allan-Varianz anhand des Restsignals,
   - Berechnen einer Differenz zwischen der berechneten Allan-Varianz und einer theoretischen Allan-Varianz, wenn der Kurs stillsteht,
   - Bestätigen des Stillstands des Kurses, wenn die Differenz kleiner als ein vorgegebener Schwellenwert ist;

   und dass die Berücksichtigung des Fehlers einen Schritt des Bestimmens einer zeitlichen Entwicklung des Fehlers anhand eines Fehlermodells der inertialen Messeinheit und den Schritt des Integrierens des Fehlers über die Zeit umfasst, um den tatsächlich verfolgten Kurs zu bestimmen.

2. Verfahren nach Anspruch 1, bei dem die Erfassung des Stillstands in der Position insbesondere durch Nutzung der Signale eines Sensors des Fahrzeugs, wie z. B. eines Geschwindigkeitsmessers oder eines Kilometerzählers, erfolgt.

3. Verfahren nach Anspruch 1, bei dem die Erfassung des Stillstands in der Position durch Nutzung der Signale eines Satelliten-Geolokalisierungssignalempfängers erfolgt.

4. Verfahren nach Anspruch 1, bei dem die Erfassung des Stillstands im Kurs die Schritte umfasst:

   - Berechnen einer Allan-Varianz auf Winkeldaten eines Winkels und einer Allan-Varianz auf Winkeldaten einer Geschwindigkeit für eine gleiche Zeitperiode,
   - Berechnen eines Verhältnisses zwischen diesen beiden Allan-Varianzen,
   - Unterscheiden zwischen dem Vorhandensein einer hochfrequenten Bewegung und dem Vorhandensein einer niederfrequenten Bewegung in Abhängigkeit von diesem Verhältnis,
   - Betrachten des Fahrzeugs als stillstehend im Kurs bei fehlender niederfrequenter Bewegung.

5. Verfahren nach Anspruch 1, bei dem der Erfassungsschritt später die Phase umfasst:

   - Erfassen eines Stillstands, wenn das Restsignal kleiner als ein vorgegebener Grenzschwellenwert ist.

6. Verfahren nach Anspruch 1, bei dem die Erfassung des Stillstands in der Position die Phasen umfasst:

   - Integrieren von Signalen, die von Beschleunigungssensoren und von Winkelsensoren der inertialen Messeinheit stammen, in ein Bezugssystem, das sich in einer von den Winkelsensoren erfassbaren Ausrichtung dreht, um ein Rohsignal der Beschleunigung, der Geschwindigkeit und der Position während einer vorgegebenen Dauer zu erhalten,

- Aufzeichnen des Rohsignals der Beschleunigung, der Geschwindigkeit und der Position während dieser vorgegebenen Dauer,
- Bestimmen der Parameter eines theoretischen Signals der Modellierung des Rohsignals der Beschleunigung, der Geschwindigkeit und der Position in Abhängigkeit von einem vorgegebenen Fehlermodell bei fehlender Bewegung,
- Berechnen eines Restsignals zwischen dem theoretischen Modellsignal und dem Rohsignal der Beschleunigung, der Geschwindigkeit und der Position.

7. Verfahren nach Anspruch 6, bei dem der Erfassungsschritt später die Phase umfasst:

   - Erfassen eines Stillstands, wenn das Restsignal kleiner als ein vorgegebener Grenzschwellenwert ist.

8. Verfahren nach Anspruch 6, bei dem die Erfassung des Stillstands in der Position später eine Berechnungsphase zur Berechnung einer Allan-Varianz anhand des Restsignals umfasst, eine Berechnungsphase zur Berechnung einer Differenz zwischen der berechneten Allan-Varianz und einer theoretischen Allan-Varianz, wenn die Position fest ist, und einer Bestätigungsphase zur Bestätigung des Stillstands der Position, wenn die Differenz kleiner als ein vorgegebener Schwellenwert ist.

9. Verfahren nach Anspruch 1, bei dem die Erfassung des Stillstands im Kurs und in der Position eine erste Erfassungsphase der Erfassung des Stillstands in der Position und eine zweite Erfassungsphase der Erfassung des Stillstands im Kurs umfasst, wobei die zweite Phase nur durchgeführt wird, wenn die erste Phase validiert wird.

10. Verfahren nach Anspruch 1, bei dem die Berücksichtigung des Fehlers die Vorgänge umfasst: Rekonstruieren der Drift der Leistung der Sensoren über die Zeit, Bestimmen des Navigationsfehlers, den der Fehler der Sensoren verursacht hat, Korrigieren desselben und Bestimmen der tatsächlichen Position des Fahrzeugs.

11. Navigationsvorrichtung, umfassend eine inertiale Messeinheit, wobei die Vorrichtung ausgebildet ist, ein Navigationsverfahren nach einem der vorhergehenden Ansprüche durchzuführen.

12. Fahrzeug, das mit einer Navigationsvorrichtung ausgestattet ist, die eine inertiale Messeinheit umfasst und ausgebildet ist, ein Navigationsverfahren nach einem der Ansprüche 1 bis 10 durchzuführen.

**Claims**

1. Method for navigating a vehicle having an inertial navigation system, comprising the step of calculating successive positions and headings of the vehicle from signals of the inertial navigation system, the method also comprising the steps of:

   - detecting at least one period of immobility in terms of both the heading and the position of the vehicle,
   - processing the signals provided by the inertial navigation system during said period of immobility in order to identify an error of the inertial navigation system,
   - taking into account the error identified in the calculation of the position and heading of the vehicle from the signals of the inertial navigation system;

   **characterised in that** the detection of immobility comprises detecting immobility in terms of heading, which comprises the phases of:

   - integrating signals from accelerometer sensors and angle sensors of the inertial navigation system, into a rotating reference frame according to a detectable orientation of the angle sensors, in order to obtain a raw heading signal for a predetermined period of time,
   - saving the raw heading signal for said predetermined period of time,
   - determining the parameters of a theoretical modelling signal of the raw heading signal depending on a predetermined error model in the absence of movement,
   - calculating a residual signal between the theoretical modelling signal and the raw heading signal,

- calculating an Allan variance from the residual signal,
- calculating a difference between the calculated Allan variance and a theoretical Allan variance while the heading is immobile,
- confirming the immobility of the heading if the difference is less than a predetermined threshold;

and **in that** the taking into account of the error comprises a step of determining a temporal evolution of the error based on an error model of the inertial navigation system and the step of integrating the error in time in order to determine the heading actually followed.

2. Method according to claim 1, wherein the detection of the immobility in terms of position is carried out using, in particular, the signals of a sensor of the vehicle such as a speedometer or odometer.

3. Method according to claim 1, wherein the detection of the immobility in terms of position is carried out using the signals of a satellite geolocation signal receiver.

4. Method according to claim 1, wherein the detection of immobility in terms of heading comprises the steps of:

- calculating an Allan variance on angular angle data and an Allan variance on angular velocity data for a same period of time,
- calculating a ratio between these two Allan variances,
- distinguishing between the presence of a highfrequency movement and the presence of a low-frequency movement depending on this ratio,
- considering the vehicle immobile in terms of heading in the absence of low-frequency movement.

5. Method according to claim 1, wherein the detection step subsequently comprises the phase of:

- detecting immobility when the residual signal is less than a predetermined threshold.

6. Method according to claim 1, wherein the detection of the immobility in terms of position comprises the phases of:

- integrating signals from accelerometer sensors and angle sensors of the inertial navigation system, into a rotating reference frame according to a detectable orientation of the angle sensors, in order to obtain a raw acceleration, speed and position signal for a predetermined period of time,
- saving the raw acceleration, speed and position signal for said predetermined period of time,
- determining the parameters of a theoretical modelling signal of the raw acceleration, speed and position signal depending on a predetermined error model in the absence of movement,
- calculating a residual signal between the theoretical modelling signal and the raw acceleration, speed and position signal.

7. Method according to claim 6, wherein the detection step subsequently comprises the phase of:

- detecting immobility when the residual signal is less than a predetermined threshold.

8. Method according to claim 6, wherein the detection of the immobility in terms of position subsequently comprises a phase of calculating an Allan variance from the residual signal, a phase of calculating a difference between the calculated Allan variance and a theoretical Allan variance when the position is fixed, and a phase of confirming the immobility of the position if the difference is less than a predetermined threshold.

9. Method according to claim 1, wherein the detection of the immobility in terms of heading and position comprises a first phase of detecting the immobility in terms of position and a second phase of detecting the immobility in terms of heading, the second phase only be implemented if the first phase is validated.

10. Method according to claim 1, wherein the taking into account of the error comprises the operations of: reconstructing the drift of performance of the sensors over time, identifying the navigation error that caused the sensor error, correcting said navigation error and determining the actual position of the vehicle.

11. Navigation device comprising an inertial navigation system, the device being provided for carrying out a navigation method according to any of the preceding claims.

12. Vehicle equipped with a navigation device which comprises an inertial navigation system and which is provided for carrying out a navigation method according to any of claims 1 to 10.

Figure unique

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9724584 A
- EP 0488594 A
- US 20120185205 A
- US 6564148 A
- US 6292751 A